# NEUE EUROPÄISCHE PATENTSCHRIFT

(11) **EP 2 569 242 B2**
(45) Veröffentlichungstag und Bekanntmachung des Hinweises auf die Entscheidung über den Einspruch: **01.03.2023**
(45) Hinweis auf die Patenterteilung: 04.09.2019
(21) Anmeldenummer: 10755164.0
(22) Anmeldetag: 20.09.2010
(51) Int. Cl.: B66B 7/06, F16G 1/08

(54) **RIEMEN FÜR DIE ANTRIEBSTECHNIK, INSBESONDERE RIEMENARTIGES ZUGELEMENT FÜR DIE AUFZUGSTECHNIK, MIT BRANDHEMMENDEN EIGENSCHAFTEN**
BELT FOR DRIVING SYSTEMS, IN PARTICULAR A BELT-LIKE TENSILE ELEMENT FOR ELEVATOR SYSTEMS, HAVING FIRE-INHIBITING PROPERTIES
COURROIE D'ENTRAÎNEMENT, EN PARTICULIER ÉLÉMENT DE TRACTION EN FORME DE COURROIE POUR ASCENSEURS, AVEC PROPRIÉTÉS RETARDATRICES DE FLAMME

(30) Priorität: 11.05.2010 DE 102010016872
(43) Veröffentlichungstag der Anmeldung: 20.03.2013
(73) Patentinhaber: ContiTech Antriebssysteme GmbH, 30165 Hannover (DE)
(72) Erfinder: GÖSER, Hubert, 29451 Dannenberg (DE); BROCKE, Stephan, 22143 Hamburg (DE); WINKLER, Thomas, 29451 Dannenberg (DE); O'DONNELL, Hugh, Longmeadow, Massachuetts 01106 (US)
(74) Vertreter: Preusser, Andrea
(86) Internationale Anmeldenummer: PCT/EP2010/063776
(87) Internationale Veröffentlichungsnummer: WO 2011/141068

(56) Entgegenhaltungen:
- WO-A1-00/37738
- CN-Y- 201 386 757
- JP-A- 2009 127 034
- US-A- 3 545 293
- US-A1- 2009 233 746

## Beschreibung

Die Erfindung betrifft einen Riemen für die Antriebstechnik, bestehend wenigstens aus:
- einem Riemenkörper aus einem polymeren Material mit elastischen Eigenschaften, umfassend eine Decklage als Riemenrücken und einen Unterbau mit einer Kraftübertragungszone; sowie
- einem in dem Riemenkörper eingebetteten Zugträger in Form von Stahlcorden.

Derartige Riemen, die auch als Antriebsriemen oder Kraftübertragungsriemen bezeichnet werden, können als Flachriemen, Keilriemen, Keilrippenriemen, Zahnriemen oder als Verbundseile ausgebildet sein. Diesbezüglich wird insbesondere auf folgende Patentliteratur verwiesen: DE 38 23 157 A1, DE 100 16 351 A1, DE 10 2006 007 509 A1, DE 10 2007 062 285 A1, DE 10 2008 012 044 A1, WO 2005/080821 A1, WO 2006/066669 A1, US 3 981 206, US 5 417 618, US3545293 und US 6 491 598.

Die Elastizität eines Riemens wird dadurch erreicht, dass der Riemenkörper und somit die Decklage und der Unterbau aus einem polymeren Material mit elastischen Eigenschaften bestehen, wobei hier insbesondere die beiden Materialgruppen Elastomere und thermoplastische Elastomere zu nennen sind. Von besonderer Bedeutung sind Elastomere auf der Basis einer vulkanisierten Kautschukmischung, enthaltend wenigstens eine Kautschukkomponente und Mischungsingredienzien. Als Kautschukkomponente wird insbesondere Ethylen-Propylen-Kautschuk (EPM), Ethylen-Propylen-Dien-Kautschuk (EPDM), (teil)hydrierter Nitrilkautschuk (HNBR), Fluor-Kautschuk (FKM), Naturkautschuk (NR), Chloropren-Kautschuk (CR), Styrol-Butadien-Kautschuk (SBR), Butadien-Kautschuk (BR) oder Polyurethan (PU) eingesetzt, die unverschnitten oder mit wenigstens einer weiteren Kautschukkomponente, insbesondere mit einem der vorgenannten Kautschuktypen, verschnitten sind, beispielsweise in Form eines EPM/EPDM- oder SBR/BR-Verschnittes. Von besonderer Bedeutung ist dabei HNBR, EPM, EPDM, PU oder ein EPM/EPDM-Verschnitt. Die Mischungsingredienzien umfassen wenigstens einen Vernetzer oder ein Vernetzersystem (Vernetzungsmittel und Beschleuniger). Weitere Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe, beispielsweise Fasern zwecks Verstärkung, und Farbpigmente. Diesbezüglich wird auf den allgemeinen Stand der Kautschukmischungstechnologie verwiesen.

Der Riemen ist mit einem eingebetteten Zugträger versehen, der aus wenigstens einem in Riemenlängsrichtung verlaufenden Zugstrang gebildet ist. Zumeist bilden mehrere Zugstränge eine Zugträgerlage. Von besonderer Bedeutung ist dabei ein Zugstrang in Cordconstruktion, wobei es diesbezüglich nach dem Stand der Technik verschiedene Werkstoffkonzeptionen gibt. Die wesentlichen Werkstofftypen sind: Stahl, Polyamid (PA), Aramid, Polyester, Glasfasern, Kohlefasern, Basalt, Polyetheretherketon (PEEK), Polyethylentherephthalat (PET), Polybenzoxazol (PBO) oder Polyethylen-2,6-naphthalat (PEN). Der Zugstrang ist zudem zumeist mit einem Haftsystem, beispielsweise mit einem Resorcin-Formaldeyd-Latex (RFL), präpariert, so dass eine dauerwirksame Haftung zu dem umgebenden polymeren Material gewährleistet ist.

Bei endlos geschlossenen Riemen für den Fahrzeugbau spielt der Werkstoff Stahl zwischenzeitlich eine untergeordnete Rolle. Hier werden insbesondere Zugstränge aus PA, PET sowie neuerdings aus Basalt eingesetzt.

Bei den nicht endlos geschlossenen Riemen als Zugelement in der Aufzugstechnik - im folgenden ein Schwerpunktsthema - kommt jedoch dem Zugstrangwerkstoff Stahl, insbesondere in Form von Stahlcorden, wegen der hohen Zugkraft eine wesentliche Bedeutung zu. Hinsichtlich des diesbezüglichen Standes der Technik wird insbesondere auf folgende Patentliteratur verwiesen: DE 10 2006 020 633 B3, DE 10 2008 018 191 A1, DE 10 2008 018 192 A1, DE 10 2008 037 537 A1, DE 10 2008 037 538 A1,

EP 1 396 458 A2, EP 1 555 234 B1, US 2002/0000346 A1 und US 6 739 433. Insbesondere die Kraftübertragungszone eines Riemens wird mit einer abriebsfesten Beschichtung versehen, die zusätzlich zur Geräuschreduzierung dient und zudem noch ölbeständig ausgerüstet sein kann. Eingesetzt wird dabei eine Flockauflage, insbesondere in Form eines Baumwoll- oder Aramidflocks, eine dünne mit Fasern (z.B. Aramidfasern) gefüllte elastische Polymerschicht, eine Textilauflage, insbesondere in Form eines Gewebes, Gewirkes oder Gestrickes, oder eine Folie (z.B. PTFE-Folie) oder ein Folienverbund (z.B. PA-PTFE-Folie). Von besonderer Bedeutung ist das Gewebe. Die hier genannten Beschichtungen werden auf der Kontaktseite zum Riemenkörper, insbesondere zum dessen Unterbau, zumeist haftfreundlich präpariert, beispielsweise mit RFL.

Ein Problem bei Riemen aller Art ist, dass das polymere Material des Riemenkörpers sehr gut brennbar ist. Im Brandfall würde das gesamte Riemenkörpermaterial abbrennen und gegebenenfalls auch noch den Zugträger schädigen. Diese Problematik ist besonders relevant bei einem riemenartigen Zugelement für die Aufzugstechnik, bei dem dann der Stahlzugträger beschädigt werden kann. Auf jeden Fall wäre die Funktion und somit die Sicherheit des Aufzuges nicht mehr gegeben.

Die Aufgabe der Erfindung besteht nun darin, einen Riemen, insbesondere ein Zugelement für die Aufzugstechnik, bereitzustellen, bei dem das Riemenkörpermaterial nicht brennbar oder selbstverlöschend sein soll, so dass im Brandfall nicht der gesamte Riemen, insbesondere das gesamte Zugelement, betroffen ist, und zwar bei einer nach wie vor vorhandenen Funktionsfähigkeit, insbesondere bei Aufzugsanlagen.

Gelöst wird diese Aufgabe durch ein Riemen gemäß Anspruch 1.

Die eingangs genannten Mischungsingredienzien für den polymeren Werkstoff werden insbesondere bei dem ersten Material A durch das brandhemmende Additiv erweitert. Hinsichtlich des ersten Materials A und des zweiten Material B gelten innerhalb des Riemenkörpers folgende Mengenanteile:
- erstes Material A: 40 Gew.-% bis 95 Gew.-%, insbesondere 60 Gew.-% bis 80 Gew.-%
- zweites Material B: 60 Gew.-% bis 5 Gew.-%, insbesondere 40 Gew.-% bis 20 Gew.-%

Als brandhemmende Additive kommen folgende Substanzklassen zum Einsatz:
- Melaminphosphat, Melaminpolyphosphat
- Melamincyanurat

Dabei kann eine einzige Substanzklasse, beispielsweise ein Melaminphospat, oder ein Zwei- oder Mehr-Komponenten-System, beispielsweise ein Gemisch aus Melaminphosphat und Melamincyanurat, verwendet werden.

Die Additive sind dabei im Wesentlichen gleichmäßig in der Polymermatrix eingemischt, insbesondere bei dem ersten Material A.

Der Mengenanteil an dem brandhemmenden Additiv für das erste Material A beträgt 5 Gew.-% bis 50 Gew.-%.

Der Mengenanteil an dem brandhemmenden Additiv für das zweite Material B beträgt dagegen 0 bis 3 Gew.-%. Die brandhemmenden Eigenschaften konzentrieren sich somit ausschließlich auf das erste Material A.

Die Decklage des Riemens, wo die hohen mechanischen Eigenschaften nicht gefordert sind, ist mit dem ersten Material A mit seiner brandhemmenden Charakteristik ausgestattet.

Da der Unterbau mit seiner Kraftübertragungszone, die mit der Traktionsscheibe in Kontakt steht, am höchsten mechanisch beansprucht ist, kommt hier dagegen das zweite Material B mit keiner oder nur einer geringen brandhemmenden Charakteristik zum Einsatz. Vorteilhafterweise enthält das zweite Material keine brandhemmenden Additive, da die Beimischung derartiger Additive das mechanische Eigenschaftsbild des polymeren Werkstoffes nachteilig verändern kann.

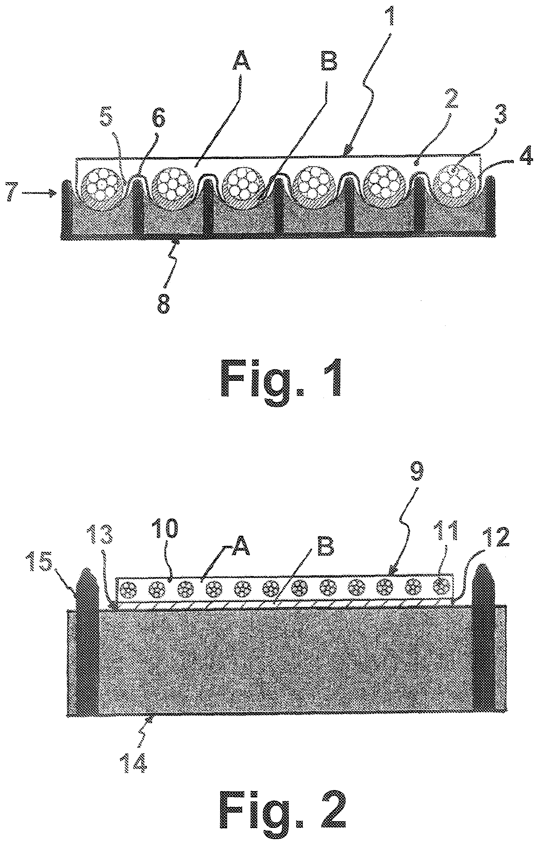

Der Bereich des Zugträgers, der auch den Übergangsbereich von Decklage und Unterbau bildet, kann mit dem ersten Material A und/oder zweiten Material B in Verbindung stehen, wobei insbesondere folgende zwei Varianten zur Anwendung gelangen:
- Das zweite Material B ist derart im Unterbau eingearbeitet, dass der Zugträger partiell oder vollständig vom zweiten Material B ummantelt ist. Die unmittelbare Umgebung des Zugträgers weist somit keine oder nur eine geringe brandhemmende Charakteristik auf. Ein derartiges Materialkonzept wird in Verbindung mit dem Ausführungsbeispiel gemäß Fig. 1 noch näher vorgestellt.
- Das zweite Material B ist derart im Unterbau eingearbeitet, dass der Zugträger vom ersten Material A partiell oder vollständig ummantelt ist. Die unmittelbare Umgebung des Zugträgers wird somit in die brandhemmende Charakteristik einbezogen. Ein derartiges Materialkonzept wird in Verbindung mit dem Ausführungsbeispiel gemäß Fig. 2 ebenfalls noch näher vorgestellt.

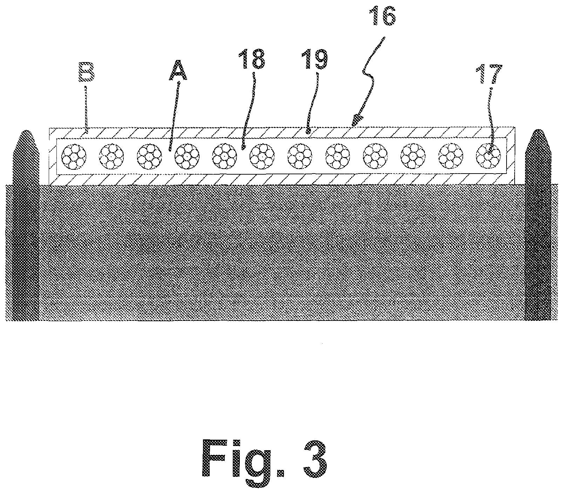

Nach einer weiteren Gestaltungsmöglichkeit bildet das erste Material A den Riemenkern und das zweite Material B die Riemenhülle. Der Zugträger ist dabei insbesondere unter vollständiger Ummantelung des ersten Materials A im Riemenkern eingebettet. Die unmittelbare Umgebung des Zugträgers wird somit in die brandhemmende Charakteristik einbezogen. Die Riemenhülle mit dem zweiten Material B umgibt vorzugsweise vollständig den Riemenkern. Ein derartiges Materialkonzept wird in Verbindung mit dem Ausführungsbeispiel gemäß Fig. 3 noch näher vorgestellt.

Zumeist ist es ausreichend, wenn der Riemenkörper ausschließlich aus den beiden Materialien A und B besteht, insbesondere in Verbindung mit den oben genannten zwei Varianten.

Je nach Riementyp sowie der Lage des Zugträgers kann es vorteilhaft sein, den Riemenkörper zusätzlich mit einer elastischen Zwischenschicht mit einem dritten Material C auszustatten, wobei innerhalb dieser Zwischenschicht der Zugträger eingebettet ist. In diese Zwischenschicht kann ein brandhemmendes Additiv eingemischt sein, wobei auf folgendes Beispiel verwiesen wird: Decklageerstes Material A25 Gew.-%Unterbau mit Kraftübertragungszonezweites Material B-Zwischenschicht mit eingebettetem Zugträgerdrittes Material C5 Gew.-%

Von dem Unterbau, der frei von einem brandhemmenden Additiv ist, erfährt der Riemenkörper zur Decklage hin eine steigende Konzentration an dem brandhemmenden Additiv.

Der Riemenkörper kann zusätzlich mit wenigstens einer eingebetteten Schicht versehen sein. Diese Schicht besteht insbesondere aus einem textilen Werkstoff in Form eines Gewebes, Gewirkes oder Gestrickes. Diese Schicht kann zudem brandhemmend ausgerüstet sein, indem beispielsweise die Textilfäden brandhemmend präpariert sind.

Ebenso können die Decklage und/oder die Kraftübertragungszone zusätzlich mit einer Beschichtung versehen sein. Als Beschichtung wird insbesondere eine Textilauflage in Form eines Gewebes, Gewirkes oder Gestrickes eingesetzt. Von besonderer Bedeutung ist dabei die Gewebeauflage. Die Beschichtung kann ebenfalls brandhemmend ausgerüstet sein, indem wiederum beispielsweise die Textilfäden brandhemmend präpariert sind.

Der Riemen ist als Flachriemen, Keilriemen, Keilrippenriemen, Zahnriemen oder als Verbundseile ausgebildet.

Der erfindungsgemäße Riemen wird insbesondere als Zugelement in der Aufzugstechnik verwendet, insbesondere unter Einsatz von Verbundseilen, eines Flachriemens oder Zahnriemens. Im Brandfall wird das Feuer nicht über das Zugelement über die Höhe des gesamten Aufzugsschachtes verteilt. Das so materialmäßig ausgerüstete Zugelement fängt sehr schlecht Feuer und erlischt zumeist nach sehr kurzer Brandstrecke von alleine wieder. Der Aufzug bleibt bedingt funktionstüchtig. Ein weiterer Vorteil ist, dass ein derartiges Zugelement einen Gebäudebrand nicht von einer Etage auf die nächste Etage übertragen kann.

Die Erfindung wird nun anhand von zwei Ausführungsbeispielen unter Bezugnahme auf schematische Zeichnungen erläutert. Es zeigen:
- Fig. 1
   - einen Riemen in Form von Verbundseilen als Zugelement für die Aufzugstechnik im Zusammenwirken mit einer profilierten Traktionsscheibe;
- Fig. 2
   - einen Riemen in Form eines Flachriemens als Zugelement für die Aufzugstechnik im Zusammenwirken mit einer unprofilierten Traktionsscheibe;
- Fig. 3
   - einen Riemen in Form eines Flachriemens mit Riemenkern und Riemenhülle als Zugelement für die Aufzugstechnik im Zusammenwirken mit einer unprofilierten Traktionsscheibe.

Fig. 1 zeigt einen Riemen 1 als Zugelement für die Aufzugstechnik, und zwar in Form von Verbundseilen mit einer Decklage 2 als Riemenrücken, einem eingebetteten Zugträger 3 mit mehreren in Längsrichtung verlaufenden Zugsträngen in Form von Stahlcorden sowie einem Unterbau 4. Der Unterbau 4 weist eine Rippenrillenstruktur auf, gebildet aus Rippen 5 und Rillen 6. Die Stahlcorde des Zugträgers 3 sind dabei jeweils im Wesentlichen innerhalb einer Rippe 5 angeordnet. Der Unterbau 4 umfasst schließlich die Kraftübertragungszone 7, die mit einer entsprechend profilierten Traktionsscheibe 8 korrespondiert. Hinsichtlich konstruktiver Details der Traktionsscheibe 8 wird beispielsweise auf die beiden Offenlegungsschriften DE 10 2008 037 537 A1 und DE 10 2008 037 538 A1 verwiesen.

Die Decklage 2 und der Unterbau 4 bilden als Gesamteinheit den elastischen Riemenkörper, der auch als Grundkörper bezeichnet wird, beispielsweise auf PU-Basis. Der Riemenkörper besteht dabei aus einem ersten Material A und einem zweiten Material B. Das erste Material A mit einem hohen Anteil an einem brandhemmenden Additiv (z.B. 25 Gew.-%) umfasst dabei die gesamte Decklage 2, wo die hohen mechanischen Eigenschaften nicht gefordert sind. Das zweite Material B, das arm (z.B. 3 Gew.-%) oder frei an einem brandhemmenden Additiv ist, umfasst nahezu den gesamten Unterbau 4 mit der Kraftübertragungszone 7. Dort ist der Riemenkörper am stärksten mechanisch belastet. Das zweite Material B ist dabei innerhalb einer Rippe 5 des Unterbaus 4 angeordnet und ummantelt zugleich nahezu den gesamten Zugträger 3.

Fig. 2 zeigt einen Riemen 9 als Zugelement für die Aufzugstechnik, und zwar hier in Form eines Flachriemens mit einer Decklage 10 als Riemenrücken, einem eingebetteten Zugträger 11 mit mehreren in Längsrichtung verlaufenden Zugsträngen in Form von Stahlcorden sowie einem Unterbau 12. Der Unterbau 12 ist hier flach ausgebildet und umfasst die Kraftübertragungszone 13, die mit einer Traktionsscheibe 14 mit Bordscheibe 15 korrespondiert. Hinsichtlich konstruktiver Details der Traktionsscheibe 14 wird hier beispielsweise auf die Offenlegungsschrift US 2002/0000346 A1 verwiesen.

Die Decklage 10 und der Unterbau 12 bilden hier ebenfalls als Gesamteinheit den elastischen Riemenkörper, beispielsweise wiederum auf PU-Basis. Der Riemenkörper besteht dabei aus einem ersten Material A und einem zweiten Material B. Das erste Material A mit einem hohen Anteil an einem brandhemmenden Additiv (z.B. 25 Gew.-%) umfasst dabei die gesamte Decklage 10 sowie den gesamten Bereich des Zugträgers 11. Dies bedeutet, dass hier sämtliche Stahlcorde von dem ersten Material A vollständig ummantelt sind. Der Unterbau 12 mit der flachen Kraftübertragungszone 13 ist mit dem zweiten Material B ausgestattet, das arm (z.B. 3 Gew.-%) oder frei an einem brandhemmenden Additiv ist.

Fig. 3 zeigt einen Riemen 16 als Zugelement für die Aufzugstechnik, und zwar wie bei dem Ausführungsbeispiel 2 in Form eines Flachriemens. Der Unterschied besteht darin, dass hier das erste Material A den Riemenkern 18 und das zweite Material B die Riemenhülle 19 bildet. Der Zugträger 17 ist dabei unter vollständiger Ummantelung des ersten Materials A im Riemenkern 18 eingebettet. Die Riemenhülle 19 umgibt vollständig den Riemenkern 18. Das erste Material A mit einem hohen Anteil an einem brandhemmenden Additiv (z.B. 25 Gew.-%) umfasst somit den gesamten Riemenkern 18. Die gesamte Riemenhülle 19 ist dagegen mit dem zweiten Material B ausgestattet, das arm (z.B. 3 Gew.-%) oder frei an einem brandhemmenden Additiv ist. Brennt also die Riemenhülle 19 mit dem zweiten Material B an den einem Feuer ausgesetzten Stellen durch, so verhindert dann der Riemenkern 18 mit dem ersten Material A die Brandausdehnung auf den gesamten Riemen 16.

Hinsichtlich der Traktionsscheibe wird auf das Ausführungsbeispiel gemäß Fig. 2 verwiesen.

### Bezugszeichenliste

### (Teil der Beschreibung)

- 1 Riemen als Zugelement in Form von Verbundseilen
- 2 Decklage als Riemenrücken
- 3 Zugträger in Form von Stahlcorden
- 4 Unterbau
- 5 Rippen
- 6 Rillen
- 7 Kraftübertragungszone
- 8 Traktionsscheibe
- 9 Riemen als Zugelement in Form eines Flachriemens
- 10 Decklage als Riemenrücken
- 11 Zugträger in Form von Stahlcorden
- 12 Unterbau
- 13 Kraftübertragungszone
- 14 Traktionsscheibe
- 15 Bordscheibe
- 16 Riemen als Zugelement in Form eines Flachriemens
- 17 Zugträger in Form von Stahlcorden
- 18 Riemenkern mit eingebetteten Zugträgern
- 19 Riemenhülle
- erstes Material A
- zweites Material B

## Patentansprüche

1. Riemen (1, 9, 16) für die Antriebstechnik, bestehend wenigstens aus:
- einem Riemenkörper aus einem polymeren Material mit elastischen Eigenschaften, umfassend eine Decklage (2, 10) als Riemenrücken und einen Unterbau (4, 12) mit einer Kraftübertragungszone (7, 13); sowie
- einem in dem Riemenkörper eingebetteten Zugträger in Form von Stahlcorden (3, 11, 17);
**dadurch gekennzeichnet, dass** der Riemenkörper aus wenigstens zwei verschiedenen Materialen A und B besteht, nämlich aus:
- einem ersten Material A, das mit einem brandhemmenden Additiv ausgerüstet ist und überall dort im Riemenkörper verbaut ist, wo die hohen mechanischen Eigenschaften nicht gefordert sind, wobei der Mengenanteil an dem brandhemmenden Additiv 5 bis 50 Gew.-% beträgt; sowie
- einem zweiten Material B, das arm oder frei an einem brandhemmenden Additiv ist und in dem Bereich des Riemenkörpers zum Einsatz kommt, welcher am höchsten mechanisch beansprucht ist wobei der Mengenanteil an dem brandhemmenden Additiv 0 bis 3 Gew.-% beträgt, und
- wobei das brandhemmende Additiv im Wesentlichen gleichmäßig in der Polymermatrix eingemischt ist und wobei als brandhemmende Additiv Melaminphosphat und/oder Melaminpolyphosphat und/oder Melamincyanurat zum Einsatz gelangt und
- wobei hinsichtlich des ersten Materials A und des zweiten Materials B folgende Mengenanteile gelten:
o erstes Material A: 40 Gew.-% bis 95 Gew.-%
o zweites Material B: 60 Gew.-% bis 5 Gew.-% und entweder
- wobei die Decklage (2, 10) des Riemens (1, 9) mit dem ersten Material A ausgestattet ist und
- wobei der Unterbau (4, 12) des Riemens (1, 9) mit der Kraftübertragungszone (7, 13) mit dem zweiten Material B ausgestattet ist
oder
- wobei das erste Material A den Riemenkern (18) und das zweite Material B die Riemenhülle (19) bildet.

2. Riemen nach Anspruch 1, **dadurch gekennzeichnet, dass** der Riemenkörper zusätzlich mit wenigstens einer eingebetteten Schicht versehen ist.

3. Riemen nach einem der Ansprüche 1 bis 2, **dadurch gekennzeichnet, dass** die Decklage (2, 10) und/oder die Kraftübertragungszone (7, 13) zusätzlich mit einer Beschichtung versehen ist/sind.

4. Riemen nach einem der Ansprüche 1 bis 3, **dadurch gekennzeichnet, dass** der Riemen (1, 9) als Flachriemen (9, 16), Keilriemen, Keilrippenriemen, Zahnriemen oder als Verbundseile (1) ausgebildet ist.

5. Verwendung eines Riemens (1, 9, 16) nach einem der Ansprüche 1 bis 4 als riemenartiges Zugelement für die Aufzugstechnik.

## Claims

1. Belt (1, 9, 16) for drive engineering, composed at least of:
- a belt structure made of a polymeric material with elastic properties, encompassing an outer layer (2, 10) as belt backing and a substructure (4, 12) with a force-transmission zone (7, 13); and
- a tension-member system in the form of steel cords (3, 11, 17) embedded in the belt structure;
**characterized in that** the belt structure is composed of at least two different materials A and B, namely of:
- a first material A which comprises a fire-retardant additive and which has been incorporated in the belt structure wherever there is no requirement for the high level of mechanical properties, where the quantitative proportion of the fire-retardant additive is 5 to 50% by weight; and
- a second material B which has low, or no, content of a fire-retardant additive and which is used in the belt-structure region which is subject to the highest level of mechanical requirements, where the quantitative proportion of the fire-retardant additive is 0 to 3% by weight, and
- where the fire-retardant additive has been mixed in essence uniformly within the polymer matrix and where the fire-retardant additive used comprises melamine phosphate and/or melamine polyphosphate and/or melamine cyanurate and
- where the quantitative proportions applicable to the first material A and the second material B are as follows:
∘ first material A: 40% by weight to 95% by weight
∘ second material B: 60% by weight to 5% by weight and either
- where the outer layer (2, 10) of the belt (1, 9) comprises the first material A and
- where the substructure (4, 12) of the belt (1, 9) with the force-transmission zone (7, 13) comprises the second material B
or
- where the first material A forms the belt core (18) and the second material B forms the belt shell (19).

2. Belt according to Claim 1, **characterized in that** the belt structure also has at least one embedded layer.

3. Belt according to either of Claims 1 and 2, **characterized in that** the outer layer (2, 10) and/or the force-transmission zone (7, 13) also has/have a coating.

4. Belt according to any of Claims 1 to 3, **characterized in that** the belt (1, 9) is a flat belt (9, 16), V-belt, V-ribbed belt or toothed belt, or composite cable (1).

5. Use of a belt (1, 9, 16) according to any of Claims 1 to 4 as belt-like tension element for elevator engineering.

## Revendications

1. Courroie (1, 9, 16) pour la technologie d'entraînement, constituée au moins par :
- un corps de courroie en un matériau polymère ayant des propriétés élastiques, comprenant une couche de recouvrement (2, 10) en tant que dos de courroie et une sous-structure (4, 12) avec une zone de transmission de force (7, 13) ; ainsi que
- un renfort de traction incorporé dans le corps de courroie sous la forme de câbles en acier (3, 11, 17) ;
**caractérisée en ce que** le corps de courroie est constitué par au moins deux matériaux différents A et B, à savoir :
- un premier matériau A, qui est équipé d'un additif ignifuge et qui est utilisé dans le corps de courroie partout où les propriétés mécaniques élevées ne sont pas requises, la proportion de l'additif ignifuge étant de 5 à 50 % en poids ; ainsi que
- un deuxième matériau B, qui est pauvre ou exempt d'additif ignifuge et qui est utilisé dans la zone du corps de courroie qui est soumise aux contraintes mécaniques les plus élevées, la proportion de l'additif ignifuge étant de 0 à 3 % en poids, et
- l'additif ignifuge étant mélangé de manière essentiellement uniforme dans la matrice polymère, et du phosphate de mélamine et/ou du polyphosphate de mélamine et/ou du cyanurate de mélamine étant utilisés en tant qu'additif ignifuge, et
- les proportions suivantes s'appliquant au regard du premier matériau A et du deuxième matériau B :
o premier matériau A : 40 % en poids % à 95 % en poids
o deuxième matériau B : 60 % en poids à 5 % en poids et soit
- la couche de recouvrement (2, 10) de la courroie (1, 9) étant équipée du premier matériau A et
- la sous-structure (4, 12) de la courroie (1, 9) avec la zone de transmission de force (7, 13) étant équipée du deuxième matériau B,
soit
- le premier matériau A formant le noyau de courroie (18) et le deuxième matériau B formant la gaine de courroie (19).

2. Courroie selon la revendication 1, **caractérisée en ce que** le corps de courroie est en outre pourvu d'au moins une couche incorporée.

3. Courroie selon l'une quelconque des revendications 1 à 2, **caractérisée en ce que** la couche de recouvrement (2, 10) et/ou la zone de transmission de force (7, 13) est/sont en outre pourvue(s) d'un revêtement.

4. Courroie selon l'une quelconque des revendications 1 à 3, **caractérisée en ce que** la courroie (1, 9) est configurée sous forme de courroie plate (9, 16), de courroie trapézoïdale, de courroie trapézoïdale à nervures, de courroie dentée ou sous forme de câble composite (1).

5. Utilisation d'une courroie (1, 9, 16) selon l'une quelconque des revendications 1 à 4 en tant qu'élément de traction de type courroie pour la technologie des ascenseurs.
